# EUROPEAN PATENT APPLICATION

(11) **EP 4 333 391 A1**
(43) Date of publication of application: **06.03.2024**
(21) Application number: 21944998.0
(22) Date of filing: 07.06.2021
(51) Int. Cl.: H04L 45/00

(54) **DETECTION DEVICE, DETECTION METHOD, AND DETECTION PROGRAM**

(71) Applicant: Nippon Telegraph And Telephone Corporation, Chiyoda-ku Tokyo 100-8116 (JP)
(72) Inventor: TERAMOTO, Yasuhiro, Musashino-shi, Tokyo 180-8585 (JP); YAMADA, Masanori, Musashino-shi, Tokyo 180-8585 (JP); YAMANAKA, Yuki, Musashino-shi, Tokyo 180-8585 (JP); TAKAHASHI, Tomokatsu, Musashino-shi, Tokyo 180-8585 (JP); NAGAI, Tomohiro, Musashino-shi, Tokyo 180-8585 (JP); KOYAMA, Takaaki, Musashino-shi, Tokyo 180-8585 (JP)
(74) Representative: Hoffmann Eitle
(86) International application number: PCT/JP2021/021581
(87) International publication number: WO 2022/259317

(57) **Abstract**

A detection device (10) includes a feature value DB (16) that stores a packet feature value, a label assigned to each packet feature value, and a threshold used for determination in advance; an encoding unit (12) configured to convert a target packet into a feature value using a first natural language processing model that has been trained using normal communication packets as learning data; and a determination unit (14) configured to assign a label to the feature value converted using the first natural language processing model, based on the feature value converted using the first natural language processing model and the data stored in the feature value DB (16), and to determine whether the target packet has an anomaly based on the assigned label.

## Description

### Technical Field

The present invention relates to a detection device, a detection method, and a detection program.

### Background Art

Detection for suspicious packets from traffic in a network can be categorized into signature-based detection and anomaly-based detection.

Signature-based detection is a process to detect intrusion by creating static signatures for network threats from threat data in advance, and comparing communication with such signatures for signature matches. Signature-based detection is useful for detecting known threats, but is not effective to address subspecies of existing malwares, obfuscation and unknown threats. Further, signature-based detection needs to collect a large amount of data on actual threats to create signatures.

Anomaly-based detection is a process that attempts to learn a normal status from in-system traffic and to detect any type of misuse falling outside of a normal status. Anomaly-based detection has to learn normal communication data but is capable of detecting unknown threats, and does not need to collect threat data in advance in contrast to signature-based detection.

### Citation List

### Patent Literature

Patent Literature 1: JP 2020-102671 A

### Non Patent Literature

Non Patent Literature 1: Diederik P. Kingma, Max Welling, "Auto-Encoding Variational Bayes", ICLR 2014., [online], [retrieved on May 14, 2021], Internet <URL: https://arxiv.org/pdf/1312.6114.pdf>

### Summary of Invention

### Technical Problem

However, machine-learning anomaly-based detection requires time for learning, and thus it is necessary to perform operation and learning at the same time without any protection against intrusion until the learning is completed. Therefore, machine-learning anomaly-based detection has risks of intrusion during the learning period, or risks of erroneously recognizing and learning a malicious packet as a normal packet in a case where the malicious packet is mixed.

There is also a solution of using signature-based detection at the same time, but it is necessary to collect various types of threat information in advance for signature creation. Consequently, it is desirable to build up a learning model capable of immediately detecting threats while reducing gaps in monitoring but without degrading system availability in anomaly-based detection.

The present invention has been made to solve such problems stated above, and an object thereof is to provide a detection device, a detection method and a detection program, each of which is capable of reducing gaps in monitoring while maintaining system availability.

### Solution to Problem

To solve the problems stated above and achieve the object, a detection device according to the present invention includes: a storage unit configured to store a packet feature value, a label assigned to each packet feature value, and a threshold used for determination in advance; a conversion unit configured to convert a target packet into a feature value using a first natural language processing model that has been trained using normal communication packets as learning data; and a determination unit configured to assign a label to the feature value converted using the first natural language processing model, based on the feature value converted using the first natural language processing model and the data stored in the storage unit, and to determine whether the target packet has an anomaly based on the assigned label.

### Advantageous Effects of Invention

According to the present invention, it is possible to reduce gaps in monitoring without degrading system availability.

### Brief Description of Drawings

Fig. 1 is a diagram illustrating one example of a configuration of a detection device according to an embodiment.
Fig. 2 is a diagram illustrating detection processing by VAE.
Fig. 3 is a diagram illustrating anomaly determination processing using a BERT model.
Fig. 4 is a diagram illustrating anomaly determination processing using a BERT model.
Fig. 5 is a diagram illustrating anomaly determination processing using a BERT model.
Fig. 6 is a diagram illustrating anomaly determination processing using a BERT model.
Fig. 7 is a diagram illustrating anomaly determination processing using a BERT model.
Fig. 8 is a flowchart illustrating a processing procedure of anomaly determination processing using a BERT model.
Fig. 9 is a flowchart illustrating a processing procedure of determination processing using a plurality of BERT models.
Fig. 10 is a diagram illustrating one example of a computer in which a program is executed to implement the detection device.

### Description of Embodiments

Hereinafter, one embodiment of the present invention will be described with reference to drawings. The present invention is not limited to this embodiment. The same elements are denoted by the same reference signs in the drawings.

### [Embodiment]

An embodiment of the present invention will be described. In the present embodiment, a new determination method is used during the learning period of an anomaly detection model, in which a feature value converted from a packet using a pre-trained natural language processing model is compared with a feature value of a past packet to determine whether the packet has an anomaly. This determination method does not need learning and a detection processing time varies only depending on a data amount of the feature value of the past packet to be compared, and thus a threat can be detected immediately. Therefore, in the embodiment, this determination is used for a learning period of the anomaly-based detection model, thereby reducing gaps in monitoring while maintaining system availability.

### [Configuration of Detection Device]

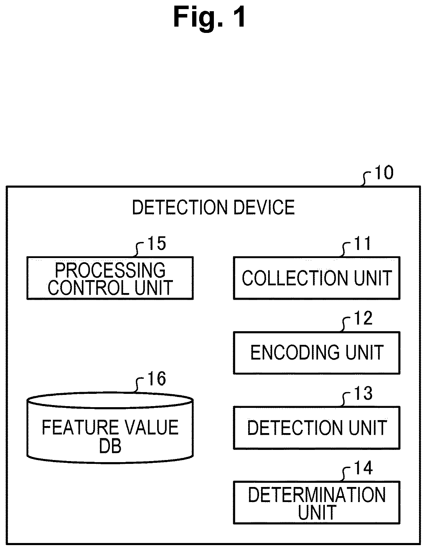

Referring to Fig. 1, a configuration and processing of the detection device according to the embodiment will be described hereinbelow. Fig. 1 is a diagram illustrating one example of a configuration of the detection device according to the embodiment.

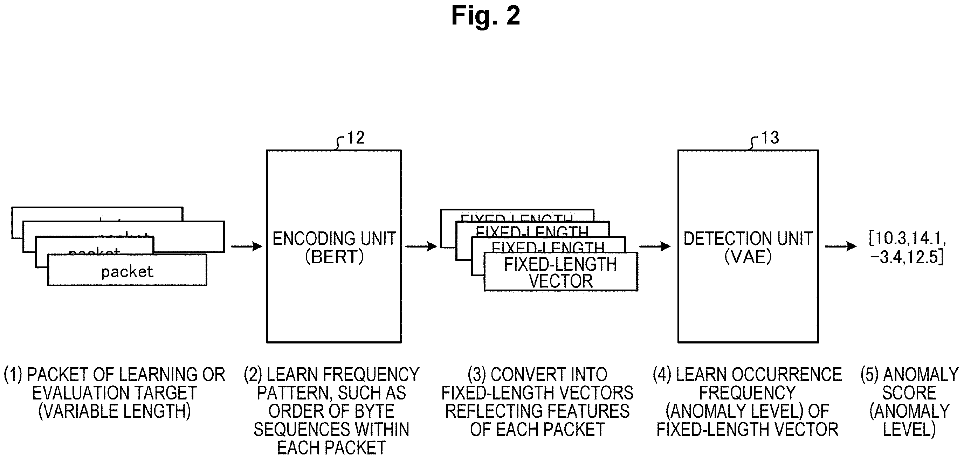

A detection device 10 according to the present embodiment is implemented by, for example, a predetermined program being read by a computer including, for example, a read only memory (ROM), a random access memory (RAM), and a central processing unit (CPU), and the CPU executing the predetermined program. As illustrated in Fig. 2, the detection device 10 includes a collection unit 11, an encoding unit 12 (conversion unit), a detection unit 13, a determination unit 14, a processing control unit 15, and a feature value database (DB) 16.

The collection unit 151 collects a target packet to be processed.

The encoding unit 152 converts the target packet into a single fixed-length vector that is a feature value, using a natural language processing model (for example, Bidirectional Encoder Representations from Transformers (BERT) model). The BERT model has been already trained for a normal communication packet as learning data.

The BERT model is a model that has learned rules by which a single packet, regarded a single sentence, is converted into a single fixed-length vector; in other words, it is a model that has learned a frequency pattern in the normal communication packet such as an order of internal byte sequences.

For example, the BERT model solves auxiliary tasks of forecasting a certain word in a document from surrounding words, thereby acquiring a good intermediate representation reflecting packet features, that is, a fixed-length vector. Furthermore, the BERT model predicts a byte at a certain position in the packet from surrounding bytes, thereby acquiring a vector representation reflecting packet features. The encoding unit 152 converts each packet into a fixed-length vector reflecting features of each packet using the BERT model.

The encoding unit 152 retains one BERT model (first natural language processing model), and in a case where packets based on a protocol not supported by this BERT model need to be processed, may use a new BERT model (second natural language processing model) as described later.

The detection unit 13 detects intrusion by detecting whether a packet has an anomaly based on the fixed-length vector converted by the encoding unit 152 using the detection model. In the detection device 10, the determination unit 14 (described later) learns a pattern of fixed-length vectors of packets determined as coming from normal communication.

For example, the detection unit 153 uses, as the detection model, a detection model based on unsupervised learning such as Variational Auto Encoder (VAE), Auto Encoder (AE) or Local Outlier Factor (LoF). Hereinafter, a case where VAE is used as the detection model will be described as an example.

For example, VAE detects communication with a low probability density as an anomaly after training for a probability density of a normal communication packet. Thus only normal communication packets need to be known, and anomaly detection is possible without learning all malicious data. VAE learns an anomaly level using a fixed-length vector corresponding to a normal communication packet at learning data.

The detection unit 13 retains one VAE (first detection model). Additionally, in a case where the encoding unit 12 uses a new BERT model for processing a packet based on an unsupported protocol, the detection unit 13 may use a new VAE (second detection model) in order to process a fixed-length vector converted by the new BERT model.

The feature value DB 16 stores a packet feature value, a label assigned to a feature value of each packet and a threshold used for determination in advance. The feature value is a fixed-length vector of the packet converted by the BERT model.

The label includes a normal label, an abnormal label, and a pre-training label. The normal label is a label indicating a fixed-length vector obtained by converting a normal communication packet. The abnormal label is a label indicating a fixed-length vector obtained by converting a malicious communication packet. The pre-training label is a label indicating a fixed-length vector obtained by converting a normal communication packet used in pre-training. The feature value DB 16 stores all or representative fixed-length vectors used for pre-training in association with pre-training labels. The threshold is used by the determination unit 14 for similarity determination between a fixed-length vector of the target packet and the fixed-length vector stored in the feature value DB 16.

The determination unit 14 assigns a label to the feature value converted using the BERT model, based on the fixed-length vector converted by the BERT model of the encoding unit 12 and the data stored in the feature value DB 16, and determines whether the target packet has an anomaly based on the assigned label.

The determination unit 14 searches the feature value DB 16 for a fixed-length vector having a similarity equal to or greater than a threshold, out of the fixed-length vectors converted using the BERT model. The determination unit 14 assigns the label which has been assigned to the retrieved fixed-length vector to the fixed-length vector converted by the BERT model. The determination unit 14 outputs the fixed-length vector to which the normal label is assigned, among fixed-length vectors converted by the BERT model, as the learning data for VAE of the detection unit 13.

The determination unit 14 determines whether to convert an appropriate fixed-length vector in the BERT model on the basis of the similarity between the fixed-length vector to which the pre-training label is assigned and the fixed-length vector of the target packet converted by the BERT model of the encoding unit 12.

In a case where the determination unit 14 determines that the feature value has not been appropriately converted by the BERT model, the processing control unit 15 provides the encoding unit 12 with a new BERT model and trains the new BERT model for conversion of the target packet into the fixed-length vector.

### [Processing in VAE]

Learning processing and detection processing in VAE of the detection unit 13 will be described hereinbelow. Fig. 2 is a diagram illustrating detection processing by VAE.

As illustrated in Fig. 2, the collection unit 11 acquires a plurality of variable-length packets as a target packet to be learned or evaluated ((1) in Fig. 2).

The encoding unit 12 converts each packet into a fixed-length vector reflecting features of each packet using the BERT model which has been trained for a frequency pattern such as an order of byte sequences of each packet ((2) and (3) in Fig. 2).

The detection unit 13 uses VAE to acquire an anomaly level (occurrence frequency of a malicious packet) for the fixed-length vector converted by encoding unit 12. In a learning step, VAE learns the anomaly level (for example, anomaly score) based on the fixed-length vector corresponding to the normal communication packet ((4) in Fig. 2). In this case, parameters of the detection model in VAE are adjusted so as to minimize the anomaly level acquired by VAE.

In an evaluation step, the detection unit 13 uses VAE to acquire the anomaly level (for example, anomaly score) for the fixed-length vector converted by the encoding unit 12 ((5) in Fig. 2). In a case where the anomaly score exceeds a predetermined threshold, the detection unit 13 detects anomaly in the target packet to be evaluated and generates an alert. The threshold is set according to, for example, required detection accuracy and/or resources of the detection device 10.

### [Anomaly Determination Processing Using BERT Model]

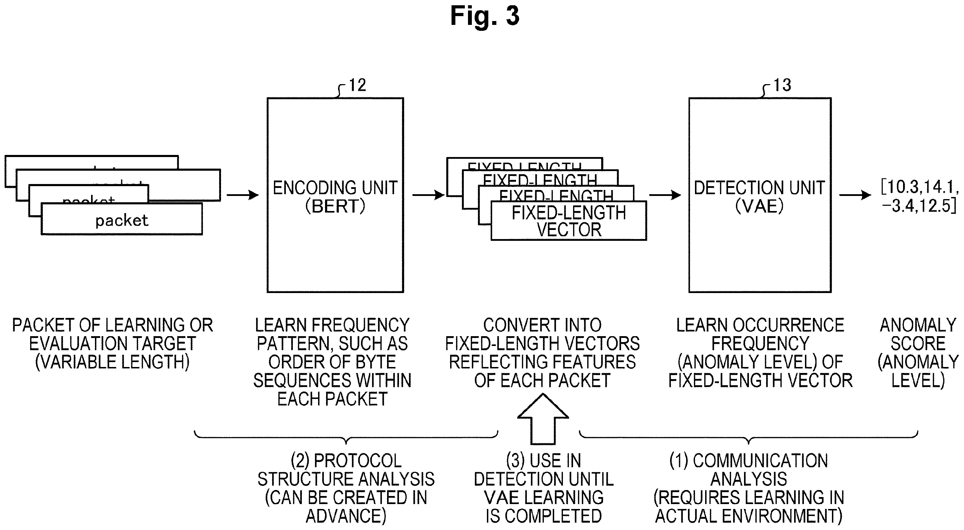

Anomaly determination processing using the BERT model will be described hereinbelow. Figs. 3 to 5 are diagrams each illustrating the anomaly determination processing using the BERT model.

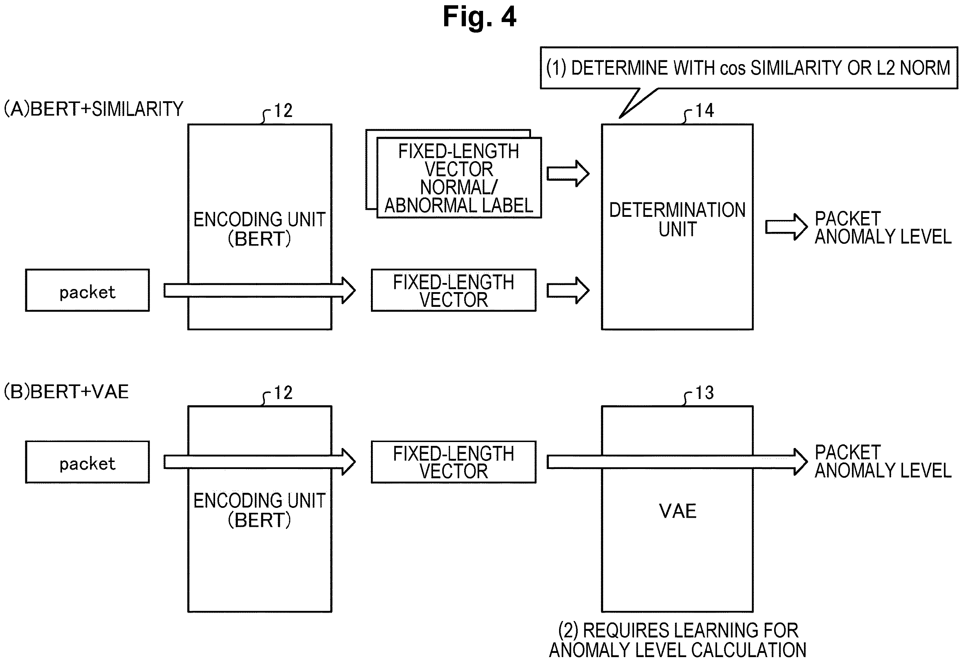

VAE of the detection unit 13 needs to be trained for calculating the anomaly level in the actual environment to enable communication analysis ((1) in Fig. 3 and (B) in Fig. 4). However, since VAE takes time to learn, it has risks of intrusion during the learning, or risks of erroneously recognizing and learning a malicious packet as a normal packet.

In the appropriately tuned detection device, the BERT model of the encoding unit 12 analyzes a protocol structure of the packet ((2) in Fig. 3), and VAE of the detection unit 13 analyzes parameters of the communication in the environment. This BERT model can be created in advance by training for the frequency pattern such as the order of byte sequences in the normal communication packet.

It is possible to compare similarity between the packets by using the fixed-length vectors output by encoding of the BERT model. By determining whether a fixed-length vector of the target packet converted by the BERT model is closed to a fixed-length vector of the normal communication packet or the malicious communication packet obtained in advance, it is possible to determine whether the target packet is normal or abnormal. In the present embodiment, the malicious packet determination processing using the BERT model is used for intrusion detection until training of VAE is completed ((3) in Fig. 3).

In particular, the determination unit 14 determines whether the target packet has an anomaly based on the similarity between the fixed-length vector of the target packet converted by the BERT model and the fixed-length vector of the normal communication packet or the malicious communication packet, which has been acquired, as the malicious packet determination processing ((A) in Fig. 4). For example, the determination unit 14 uses cos similarity or L2 norm as the similarity.

In the detection processing using VAE, the detection processing time is constant, however erroneous detection may be caused unless learning is performed after data is sufficiently collected, and over-detection correction requires re-training of the entire model.

On the other hand, in the anomaly determination processing using the BERT model, the detection processing time varies depending on the data amount, however it is possible to determine whether the packet has an anomaly only by comparison with the past packet, thus learning is unnecessary. Further, in the anomaly determination processing using the BERT model, it is enough to label the past packets to enable over-detection correction, and the over-detection correction can be adopted for various uses other than detection by modifying labeling and used data.

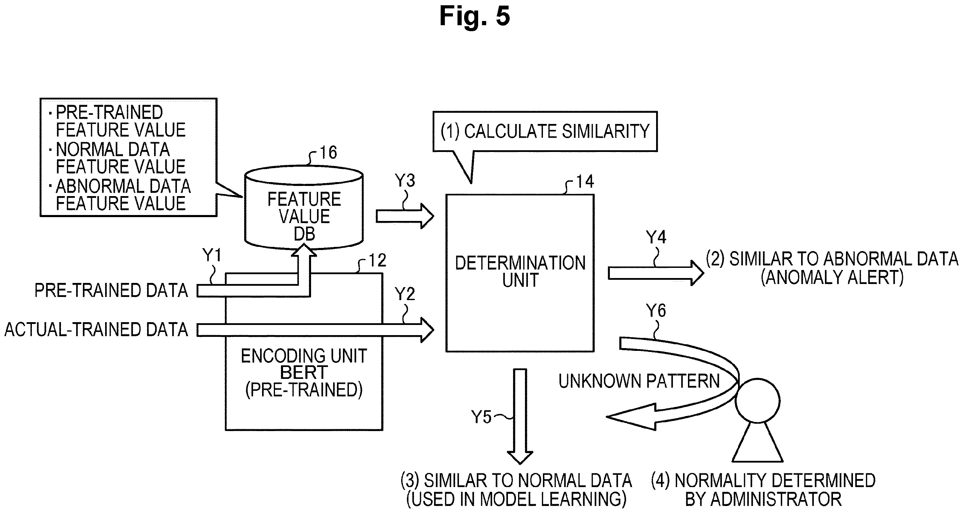

Referring to Fig. 5, application of the anomaly determination processing using the BERT model will be described. As illustrated in Fig. 5, the feature value DB 16 stores a feature value (fixed-length vector) of the normal communication packet used in pre-training of the BERT model, feature values of the normal communication packet and the malicious communication packet used in actual learning, a label associated with each packet, and a threshold used for determination (arrow Y1).

While VAE of the detection unit 13 is trained, the determination unit 14 labels the input packet by using the fixed-length vector converted from the packet by the pre-trained BERT model of the encoding unit 12 (arrow Y2) and the data stored in the feature value DB 16 (arrow Y3).

In particular, the determination unit 14 calculates the similarity between the fixed-length vector converted using the BERT model and the fixed-length vector stored in the feature value DB 16 ((1) in Fig. 5). The determination unit 14 extracts a fixed-length vector having similarity equal to or greater than the threshold from the feature value DB 16. The determination unit 14 assigns the label which has been assigned to the extracted fixed-length vector to the fixed-length vector of the target packet. The determination unit 14 determines whether the target packet has an anomaly on the basis of the assigned label.

In a case where the assigned label is the abnormal label, the determination unit 14 determines that the target packet is similar to the malicious communication packet (arrow Y4) and generates the anomaly alert ((2) in Fig. 5). In a case where the assigned label is the normal label, the determination unit 14 determines that the target packet is similar to the normal communication packet (arrow Y5) and uses such a packet as the learning data for VAE ((3) in Fig. 5) .

In a case where the calculated similarity is lower than the threshold, the determination unit 14 determines that the target packet is unknown data and sends a confirmation request to an administrator. The administrator determines whether the target packet is normal referring to the request ((4) in Fig. 5), and inputs the determination result to the detection device 10. The determination result is fed back to the feature value DB 16 by the determination unit 14 and used for next determination to suppress over-detection. In other words, the determination unit 14 outputs a notice related to the target packet to which the label is not assigned to the feature value, and in a case where the label for the target packet is input, stores the feature value of the target packet and the input label in association with each other in the feature value DB 16.

Further, the determination unit 14 calculates the similarity with the feature value to which the pre-training label is assigned, and in a case where the calculated similarity is lower than the threshold, notifies the administrator of the calculated similarity as a packet based on a protocol for which the BERT model does not support (arrow Y6), and does not perform normality determination. Alternatively, the determination unit may perform 7-tuple determination.

An exemplified determination in the determination unit 14 will be described hereinbelow. For example, the administrator confirms that a packet 1 is normal. The determination unit 14 stores the normal label in the feature value DB 16 in association with the feature value of the packet 1. For a packet 2, the determination unit 14 calculates its similarity with the packet 1, and sends a confirmation request to the administrator because the similarity is lower than the threshold. Since the administrator confirms that the packet 2 is normal, the determination unit 14 stores the feature value of the packet 2 in the feature value DB 16 in association with the normal label.

For a packet 3, the determination unit 14 calculates its similarity with the packets 1 and 2, and sends a confirmation request to the administrator because the similarity is lower than the threshold for all the packets. Since the administrator confirms that the packet 3 is malicious, the determination unit 14 stores the feature value of the packet 3 in the feature value DB 16 in association with the abnormal label.

For a packet 4, the determination unit 14 calculates its similarity with the packets 1 to 3, and determines that it is normal communication because the packet 4 is most similar to the packet 2. For the packet 4, the feature value and other data are not stored in the feature value DB 16.

For a packet 5, the determination unit 14 calculates its similarity with the packets 1 to 3, determines that it is malicious communication because the packet 5 is most similar to the packet 3, and outputs the alert. For suppressing initial over-detection, the determination unit 14 may process packets as normal data for first several minutes after activation, assign a normal label to each feature value, and store them in the feature value DB 16. Since the number of records in the feature value DB 16 increases each time a new communication pattern is generated, leading to degraded performance, the detection device 10 switches a detection method to a method via VAE ((B) in Fig. 3) in a case where training of VAE of the detection unit 13 is completed.

### [Determination Processing Using Several BERT Models]

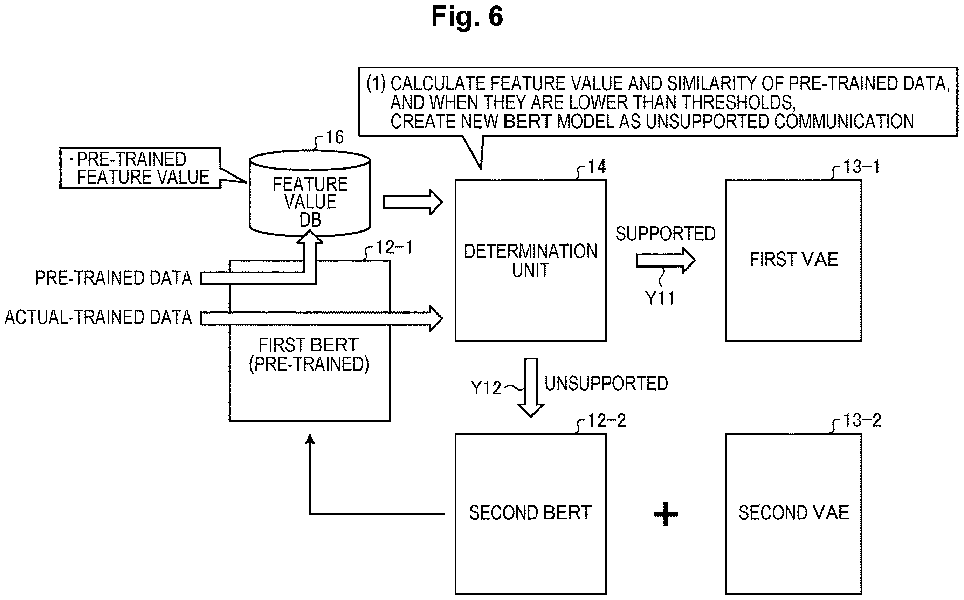

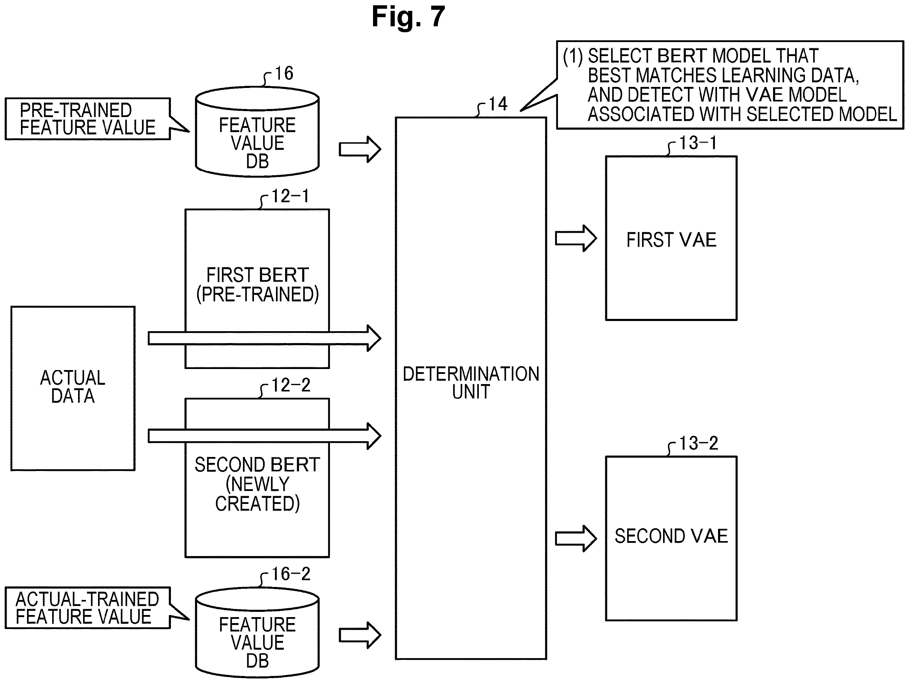

Further, the detection device 10 may perform determination using a plurality of BERT models and VAE. Figs. 6 and 7 are diagrams each illustrating the anomaly determination processing using the BERT models.

In the detection device 10, during a learning period of first VAE 13-1, a packet for which a pre-trained first BERT model 12-1 (first natural language processing model) determines it is normal communication is output to the first VAE 13-1 corresponding to the first BERT model 12-1 as a packet of a protocol supported by the first BERT model 12-1 (arrow Y11).

A protocol (unique protocol or minor protocol) not included in the packet used for pre-training can be detected by comparing with a representative feature value in the pre-training data. The determination unit 14 calculates the similarity between the feature value to which the pre-training label is assigned and the feature value of the target packet, and in a case where the calculated feature value is lower than the threshold, determined that the target packet is communication based on a protocol not supported in the first BERT model 12-1 ((1) in Fig. 6).

When the first BERT model 12-1 is trained again for learning the communication based on the unsupported protocol, a feature value generated by the BERT model changes, thus the first VAE 13-1 also needs to be trained again.

Consequently, the detection device 10 newly provides a second BERT model 12-2 (second natural language processing model) and second VAE 13-2 (second detection model) corresponding to the second BERT model 12-2 only for the protocol not supported by the first BERT model 12-1, to enable the detection ((2) in Fig. 6). The detection device 10 trains the second BERT model 12-2 for conversion of the target packet into a feature value. The determination unit 14 outputs the feature value converted by the second BERT model 12-2 as learning data of the second VAE 13-2. According to the detection device 10, in a case where a communication packet of a protocol not supported by the first BERT model 12-1 is input, the communication packet can be appropriately processed without re-training of the first VAE 13-1.

During the monitoring, as illustrated in Fig. 7, the determination unit 14 selects the BERT model in which the converted feature value of the target packet is the most similar to the feature value of the learning data, out of the first BERT model 12-1 and the second BERT model 12-2, and enables the VAE model corresponding to the selected BERT model to detect intrusion.

For example, the determination unit 14 calculates, for the target packet, the similarity between the feature value converted by the first BERT model 12-1 and the feature value of the normal communication packet used for the pre-training and held in the feature value DB 16. The determination unit 14 calculates, for the target packet, the similarity between the feature value converted by the second BERT model 12-2 and the feature value of the packet learned in the actual environment by the second BERT model 12-2 and held in the feature value DB 16-2.

Subsequently, the determination unit 14 compares the calculated similarity, selects VAE corresponding to the BERT model having the higher similarity, and executes detection. As described above, the detection device 10 can improve the detection accuracy by selecting the BERT model and VAE suitable for detection and performing detection. The detection device 10 may also compress the first BERT model 12-1 and the second BERT model 12-2 into a single model in accordance with a timing when VAE is trained again.

### [Processing Procedure of Anomaly Determination Processing Using BERT Model]

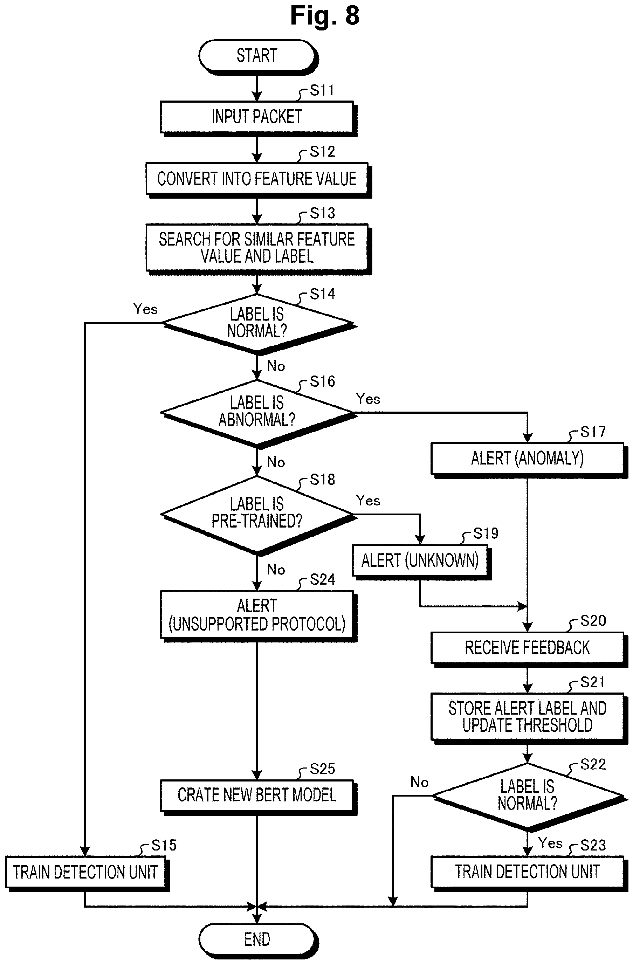

A processing procedure of the anomaly determination processing using the BERT model when VAE is trained will be described. Fig. 8 is a flowchart illustrating the processing procedure of the anomaly determination processing using the BERT model.

As illustrated in Fig. 8, when a target packet is input (step S11), the encoding unit 12 converts the packet into a fixed-length vector that is a feature value using the BERT model (step S12).

The determination unit 14 searches the feature value DB 16 for a feature value having similarity equal to or greater than the threshold with the feature value of the target packet converted by the BERT model, and a label assigned to the feature value (step S13). The determination unit 14 assigns a label of the retrieved feature value to the feature value of the target packet. Subsequently, the determination unit 14 determines whether the label assigned to the feature value of the target packet is a normal label (step S14).

In a case where the label is the normal label (step S14: Yes), the determination unit 14 outputs the feature value of the target packet as learning data for VAE of the detection unit 13 to promote the training of VAE in the detection unit 13 (step S15).

On the other hand, in a case where the label is not the normal label (step S14: No), the determination unit 14 determines whether the label assigned to the feature value of the target packet is the abnormal label (step S16). In a case where the label is the abnormal label (step S16: Yes), the determination unit 14 generates an alert indicating the target packet has an anomaly (step S17).

In a case where the label is not the abnormal label (step S16: No), the determination unit 14 determines whether the label assigned to the feature value of the target packet is the pre-training label (step S18).

In a case where the label is the pre-training label (step S18: Yes), the determination unit 14 generates an alert indicating the target packet is unknown data (step S19). When the determination unit 14 receives feedback including the label of the packet from the administrator for the alerts issued in steps S17 and S19 (step S20), the label determined by the administrator is stored in the feature value DB 16 in association with the feature value of the target packet, and the threshold used in similarity determination is updated (step S21).

In a case where the label is the normal label according to the determination made by the administrator (step S22: Yes), the determination unit 14 outputs the feature value of the target packet as learning data for VAE of the detection unit 13 (step S23) to promote the training of VAE in the detection unit 13. In a case where the label determined by the administrator is not the normal label (step S22: No), the anomaly determination processing for the target packet is terminated.

In a case where the label is not the pre-training label (step S18: No), the determination unit 14 generates an alert indicating the target packet is a packet based on a protocol not supported by the BERT model (step S24). In such a case, the detection device 10 provides the encoding unit 12 with a new BERT model (step S25), and trains this new BERT model for conversion of a target packet into a fixed-length vector. The detection device 10 trains new VAE of the detection unit 13 with the fixed-length vector converted by the new BERT model as learning data.

### [Processing Procedure of Anomaly Determination Processing Using Several BERT Models]

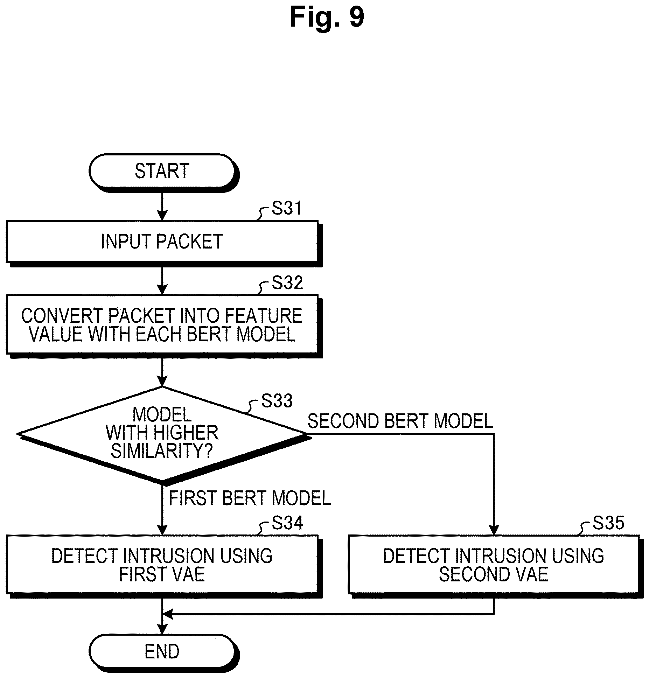

Fig. 9 is a flowchart illustrating the processing procedure of determination processing using a plurality of BERT models.

When the target packet is input (step S31), the first BERT model 12-1 and the second BERT model 12-2 convert the target packet into a feature value (step S32).

The determination unit 14 calculates similarity between the feature value converted by the first BERT model 12-1 and the feature value of the normal communication packet held by the feature value DB 16 and used for pre-training, and also similarity between the feature value converted by the second BERT model 12-2 and the feature value held by the feature value DB 16-2. The determination unit 14 compares the calculated similarity and determines a BERT model having higher similarity (step S33).

In a case where the BERT model with higher similarity is the first BERT model 12-1 (step S33: first BERT model 12-1), the determination unit 14 inputs the feature value converted by the first BERT model 12-1 to the first VAE 13-1, and performs detection using the first VAE 13-1 (step S34). In a case where the BERT model with higher similarity is the second BERT model 12-2 (step S33: second BERT model 12-2), the determination unit 14 inputs the feature value converted by the second BERT model 12-2 to the second VAE 13-2, and performs detection using the second VAE 13-2 (step S35).

### [Effects of Embodiment]

In the detection device 10 according to the embodiment, a new determination method can be applied, in which a feature value converted from a packet using a pre-trained BERT model is compared with a feature value of the past packet to determine whether the packet has an anomaly. This determination method does not need learning under monitoring and a detection processing time varies only depending on a data amount of the feature value of the past packet to be compared, thus threat can be detected immediately. Therefore, in the detection device 10, this determination is used for a learning period of the anomaly-based detection model, thereby reducing gaps in monitoring while maintaining system availability.

The BERT model is correctly recognized or authenticated even when data of another environment is converted after the pre-training is done, and it is also possible to accurately determine on anomaly using the BERT model.

### [System Configuration of Embodiment]

Each component of the detection device 10 is functionally conceptual, and does not necessarily have to be physically configured as illustrated. That is, specific forms of distribution and integration of functions of the detection device 10 are not limited to the illustrated forms, and all or a part thereof can be functionally or physically distributed or integrated in any unit according to, for example, various loads and usage conditions.

Moreover, all or any of the processing performed in the detection device 10 may be implemented by a CPU, a graphics processing unit (GPU), and a program analyzed and executed by the CPU and the GPU. Further, the processing performed in the detection device 10 may be implemented as hardware by wired logic.

Furthermore, among the processing described in the embodiment, all or a part of the processing described as being automatically performed can be manually performed. Alternatively, all or a part of the processing described as being manually performed can be automatically performed by a known method. The processing procedures, control procedures, specific names, and information including various data and parameters, as described and illustrated, can be appropriately changed unless otherwise specified.

### [Program]

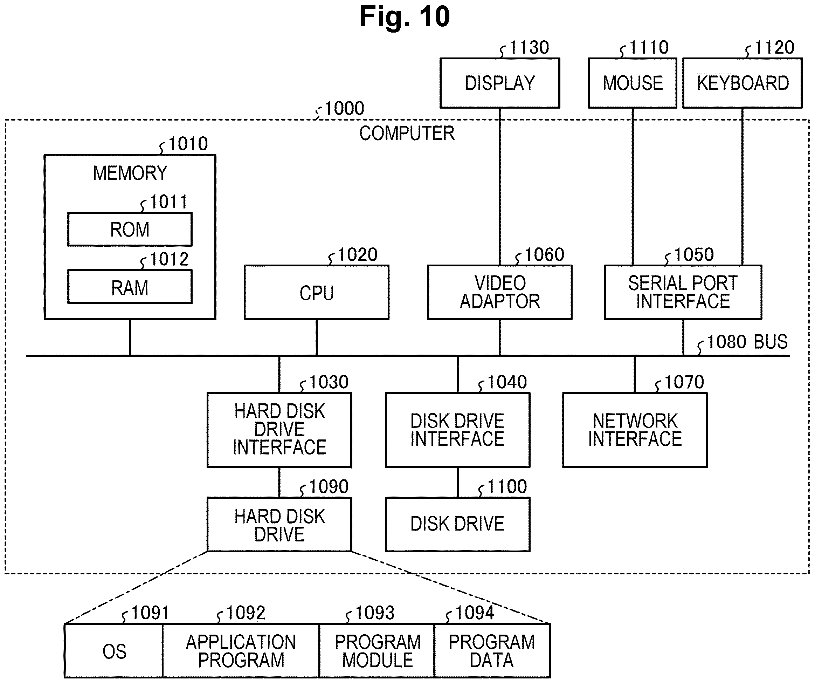

Fig. 10 is a diagram illustrating one example of a computer in which a program is executed to implement the detection device 10. A computer 1000 includes, for example, a memory 1010 and a CPU 1020. Furthermore, the computer 1000 also includes a hard disk drive interface 1030, a disk drive interface 1040, a serial port interface 1050, a video adapter 1060, and a network interface 1070. These units are connected to each other by a bus 1080.

The memory 1010 includes a ROM 1011 and a RAM 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an operating system (OS) 1091, an application program 1092, a program module 1093, and program data 1094. That is, the program that defines each processing of the detection device 10 is implemented as the program module 1093 in which codes executable by the computer 1000 are described. The program module 1093 is stored in, for example, the hard disk drive 1090. For example, the program module 1093 for executing processing similar to the functional configurations in the detection device 10 is stored in the hard disk drive 1090. The hard disk drive 1090 may be replaced with a solid state drive (SSD).

Furthermore, setting data used in the processing of the embodiment is stored as the program data 1094, for example, in the memory 1010 or the hard disk drive 1090. The CPU 1020 reads the program module 1093 and the program data 1094 stored in the memory 1010 and the hard disk drive 1090 to the RAM 1012 as necessary and executes the program module 1093 and the program data 1094.

The program module 1093 and the program data 1094 are not limited to being stored in the hard disk drive 1090, and may be stored in, for example, a removable storage medium and read by the CPU 1020 via the disk drive 1100 or the like. Alternatively, the program module 1093 and the program data 1094 may be stored in another computer connected via a network (local area network (LAN), wide area network (WAN), or the like). Then, the program module 1093 and the program data 1094 may be read by the CPU 1020 from another computer via the network interface 1070.

Although the embodiment to which the invention made by the present inventors is applied has been described above, the present invention is not limited to the description and drawings constituting a part of the disclosure of the present invention according to the present embodiment. That is, other embodiments, examples and operation techniques made by those skilled in the art on the basis of the present embodiment are all included in the scope of the present invention.

### Reference Signs List

- 10: Detection device
- 11: Collection unit
- 12: Encoding unit
- 13: Detection unit
- 14: Determination unit
- 15: Processing control unit
- 16: Feature value DB

## Claims

1. A detection device comprising:
a storage unit configured to store a packet feature value, a label assigned to each packet feature value, and a threshold used for determination in advance;
a conversion unit configured to convert a target packet into a feature value using a first natural language processing model that has been trained using normal communication packets as learning data; and
a determination unit configured to assign a label to the feature value converted using the first natural language processing model, based on the feature value converted using the first natural language processing model and the data stored in the storage unit, and to determine whether the target packet has an anomaly based on the assigned label.

2. The detection device according to claim 1, wherein the determination unit is configured to output a notice related to the target packet to which the label is not assigned to the feature value, and in a case where a label for the target packet is input, to store the feature value of the target packet and the input label in association with each other in the storage unit.

3. The detection device according to claim 1 or 2, wherein the determination unit is configured to, in a case where it is input that the assigned label for the feature value is false, update the threshold stored in the storage unit.

4. The detection device according to any one of claims 1 to 3, wherein the determination unit is configured to output a feature value to which a normal label is assigned among feature values converted using the first natural language processing model, as learning data of a first detection model for detecting intrusion.

5. The detection device according to any one of claims 1 to 4,
wherein the storage unit is configured to store all or representative feature values used in pre-training in association with pre-training labels each indicating that it is a feature values used in the pre-training, and
the determination unit is configured to determine whether a feature value is appropriately converted by the first natural language processing model, based on a similarity between the feature value to which the pre-training label is assigned and the feature value of the target packet, which has been converted using the first natural language processing model.

6. The detection device according to claim 5, further comprising:
a processing control unit configured to, in a case where the determination unit determines that a feature value has been not appropriately converted by the first natural language processing model, cause the conversion unit to establish a new second natural language processing model, and to train the second natural language processing model on conversion of the target packet into a feature value,
wherein the determination unit is configured to output a feature value converted by the second natural language processing model, as learning data of a second detection model for detecting intrusion.

7. The detection device according to claim 6, wherein the determination unit is configured to select a natural language processing model in which the converted feature value is most similar to the feature value of the packet that is learning data, among the first and second natural language processing models, and to use the detection model corresponding to the selected natural language processing model to detect intrusion.

8. A detection method executed by a detection device, the detection method comprising:
a process of converting a target packet into a feature value using a first natural language processing model that has been trained using normal communication packets as learning data; and
a process of assigning a label to the feature value converted using the first natural language processing model, based on the feature value converted using the first natural language processing model, a packet feature value obtained in advance, a label assigned to each packet feature value, and a threshold used in the determination, and determining whether the target packet has an anomaly based on the assigned label.

9. A detection program causing a computer to execute:
a step of converting a target packet into a feature value using a first natural language processing model that has been trained using normal communication packets as learning data; and
a step of assigning a label to the feature value converted using the first natural language processing model, based on the feature value converted using the first natural language processing model, a packet feature value obtained in advance, a label assigned to each packet feature value, and a threshold used in the determination, and determining whether the target packet has an anomaly based on the assigned label.
